# EUROPÄISCHE PATENTANMELDUNG

(11) **EP 1 220 196 A1**
(43) Veröffentlichungstag der Anmeldung: **03.07.2002**
(21) Anmeldenummer: 00128522.0
(22) Anmeldetag: 27.12.2000
(51) Int. Cl.: G10L 15/06

(54) **Verfahren zur Spracherkennung in einem kleinen elektronischen Gerät**

(71) Anmelder: SIEMENS AKTIENGESELLSCHAFT, 80333 München (DE)
(72) Erfinder: Kunstmann, Niels, Dr., 85540 Haar (DE); Schneider, Tobias, Dr., 81825 München (DE)

(57) **Zusammenfassung**

Verfahren zur Spracherkennung in einem kleinen elektronischen Gerät, insbesondere Telekommunikations- oder Datenendgerät, mit Mitteln zur Spracheingabe und -erkennung, welche zur Erkennung eines vorbestimmten Basiswortschatzes aufgrund einer phonetischen Modellierung und zur Ergänzung des Basiswortschatzes durch Einsprechen neuer Worte ausgebildet sind, wobei für jedes neue Wort eine Sprachmerkmals-Vektorfolge in einem hochdimensionalen Merkmalsraum eines Hidden-Markov-Modells erzeugt wird, wobei die Sprachmerkmals-Vektorfolge mit einer gespeicherten Phonemsegmentfolge als Modellinformation abgetastet wird.

## Beschreibung

Die Erfindung betrifft ein Verfahren zur Spracherkennung in einem kleinen elektronischen Gerät nach dem Oberbegriff des Anspruchs 1.

Tragbare und speziell auch handgehaltene elektronische Geräte sind aus der modernen Gesellschaft nicht mehr wegzudenken und stellen seit längerem einen Gegenstand dynamischer technischer und wirtschaftlicher Entwicklung dar. Diese Entwicklung hat ihren Durchbruch mit den frühen tragbaren Transistorradios und Taschen-Transistorradios gehabt und später mit dem Walkman und dem tragbaren CD-Spieler (Discman) auf dem Gebiet der Unterhaltungselektronik weitere Höhepunkte erlebt. Eine ähnliche Entwicklung zeichnet sich auf diesem Gebiet bereits jetzt für den MP3-Player zur Speicherung von aus dem Internet heruntergeladenen Musikstücken ab.

Neben handgehaltenen Audiogeräten zählen zu den erwähnten Geräten auch die seit langem zur Bedienung von stationären Fernseh-, Video- und Hifi-Geräten üblichen und in letzter Zeit auch verstärkt zur Steuerung anderer Geräte im Heimbereich (Beleuchtung, Tür- und Torsteuerungen etc.) und im Auto eingesetzten Fernbediengeräte.

Bei den ebenfalls stark verbreiteten handgehaltenen Rechenund Datenverarbeitungsgeräten der verschiedenen Anwendungsspezifikationen und Leistungsklassen - vom einfachen Taschenrechner über den programmierbaren Taschenrechner und einfachere Adreß- und Termindatenbanken bis hin zum höchstleistungsfähigen Handheld-PC bzw. PDA (Personal Digital Assistant) - hat sich eine rasante Entwicklung hin zu höherer Leistungsfähigkeit und Komplexität vollzogen.

Herausragende wirtschaftliche Bedeutung haben in den letzten Jahren bei den handgehaltenen elektronischen Geräten die Mobiltelefone und Schnurlostelefone erlangt. Auch hier ist eine höchst dynamische Entwicklung der Leistungsfähigkeit zu verzeichnen, die zu modernen Mobiltelefonen mit einer Fülle von Komfortmerkmalen und Internetzugang per WAP (Wireless Application Protocol) geführt hat.

Die erheblich gestiegene Komplexität der Funktionen der erwähnten Geräte hat bereits vor einiger Zeit zu einem Abgehen von der althergebrachten Bedienung über einfache Funktionstasten und zum verstärkten Einsatz sprachorientierter und/ oder grafischer Benutzeroberflächen bzw. -schnittstellen geführt. Angeregt durch die dynamische Entwicklung und den Anwendungserfolg von Sprachsteuerungs- und Spracheingabesystemen bei PCs und im Einklang mit der zunehmenden Komplexität der erwähnten handgehaltenen Geräte, werden auch diese neuerdings verstärkt mit Sprachsteuerungs- bzw. Eingabemöglichkeiten angeboten. Marktüblich sind bereits entsprechend ausgerüstete Fernbediengeräte - die allerdings nur über ein geringes Vokabular an Steuerworten verfügen - sowie Mobiltelefone, bei denen insbesondere Steuerfunktionen per Spracheingabe ausgelöst und Rufnummern angewählt werden können.

Bei den bisher bekannten Verfahren zur Spracherkennung ist grundsätzlich die sprecherunabhängige von der sprecherabhängigen Spracherkennung zu unterscheiden. Sprecherunabhängige Systeme arbeiten auf Phonem-Basis und nutzen Aussprachelexika als Wissensquelle für die Spracherkennung. Alle Phoneme sind in einem Hidden-Markov-Modell (HMM) akustisch modelliert, und im Aussprachelexikon wird für jedes Wort in einem bestimmten Format - beispielsweise dem sogenannten Sampa-Format - eine phonetische Transkription gespeichert. Die Spracherkennungsfähigkeit des Systems ist auf den in dem Aussprachelexikon gespeicherten Wortschatz beschränkt.

Sprecherabhängige Spracherkennungssysteme haben diese grundsätzliche Limitierung nicht, denn bei ihnen wird der zu erkennende Wortschatz durch den Benutzer in einer Trainingsphase eingesprochen. Dies hat auch den Vorteil einer gegenüber sprecherunabhängigen Systemen höheren Erkennungsgenauigkeit (natürlich nur bei dem Sprecher, der auch das Training ausgeführt hat). Der erforderliche Trainingsaufwand stellt andererseits natürlich einen Gebrauchswertnachteil für den Nutzer des Systems und somit auch von mit solchen Systemen ausgerüsteten Geräten dar.

Bei der Entwicklung moderner Spracherkennungssysteme, insbesondere für kleinere elektronische Geräte der oben genannten Art, versucht man einen ausgewogenen Kompromiß zwischen der Benutzerfreundlichkeit einerseits und einer hohen Erkennungsgenauigkeit und Erweiterbarkeit andererseits zu finden. Der Anwender wünscht sich ein Spracherkennungssystem, welches sofort - ohne vorhergehendes Training - einsatzbereit ist. Wünschenswert ist aber auch die Möglichkeit eines flexiblen Nachtrainierens von Teilen des Wortschatzes, deren zuverlässige Erkennung sich als problematisch erwiesen hat, sowie die Möglichkeit einer Ergänzung des Wortschatzes.

Auch adaptive Spracherkennungssysteme sind bereits bekannt. Man kennt hier zum einen das Verfahren der HMM-Adaption, welches bei marktüblichen Diktiersystemen verwendet wird. Der Benutzer spricht im Rahmen eines sogenannten "Enrollment" vorgegebene Wörter bzw. Texte ein, woraufhin die Modellierung der Phoneme im HMM an die benutzerspezifische Aussprache angepaßt wird. Da hier eine Adaption auf Phonem-Ebene und nicht für ganze Worte erfolgt, kann eine Verbesserung der Erkennungsgenauigkeit auch für Worte erzielt werden, die gar nicht Bestandteil des Trainingssets waren. Nachteilig ist allerdings der relativ hohe Aufwand für die Präparation eines ausgewogenen Trainingsmaterials zur Erreichung einer_optimalen Adaption bei der Modellierung der Phoneme.

Ein zweites bekanntes Verfahren ist das sogenannte SayIn-Verfahren. Hierbei spricht der Benutzer speziell und ausschließlich die zu adaptierenden Wörter ein. Ein HMM-Phonemerkenner liefert für jedes eingesprochene Wort eine zugehörige Phonemfolge, die dem Aussprachelexikon hinzugefügt wird. Bei diesem Verfahren sind einzelne Worte schnell trainierbar - das Training eines großen Ergänzungs-Wortschatzes ist jedoch mit hohem Aufwand verbunden, da jedes Wort desselben einzeln eingesprochen werden muß.

Bei dem erwähnten SayIn-Verfahren lassen zudem nach den Erkenntnissen der Erfinder die Modellierungsergebnisse qualitativ vielfach noch zu wünschen übrig. In der Tat wird dieses Verfahren in der Praxis bisher dazu verwendet, einen sprecherabhängigen Wortschatz eines Spracherkennungssystems neu aufzubauen oder zu erweitern - eine Verbesserung der Erkennungsgenauigkeit von primär sprecherunabhängig hinterlegten Wörtern wird jedoch nicht realisiert.

Das sprecherabhängige Hinzufügen von Wörtern (sowie auch die Neu-Modellierung von bereits im Wortschatz enthaltenen, aber schlecht erkannten Wörtern) erfolgt in bekannter Weise auf der Basis einer Phonemkettenerkennung. Die bei diesem Enrollment erkannten Phonemketten werden in das Aussprachelexikon aufgenommen und stehen für eine spätere Erkennung der entsprechenden Worte zur Verfügung. Speziell beim Einsatz von Spracherkennungssystemen in kleineren elektronischen Geräten mit beschränkten Ressourcen - im sogenannten "Embedded"-Bereich - besteht noch Verbesserungsbedarf.

Der Erfindung liegt daher die Aufgabe zugrunde, ein Verfahren der gattungsgemäßen Art ("SayIn-Verfahren") dahingehend qualitativ zu verbessern, daß eine höhere Erkennungsgenauigkeit auch in Systemen mit begrenzten Ressourcen erreicht wird.

Diese Aufgabe wird durch ein Verfahren mit den Merkmalen des Anspruchs 1 gelöst.

Die Erfindung schließt den grundlegenden Gedanken ein, eine verbesserte Abtastung bzw. Abbildung der Sprachmerkmals-Vektorfolgen neu zu erlernender Worte anzugeben. Sie schließt weiter den Gedanken ein, eine gegenüber der bekannten Abbildung auf eine Phonemsequenz (Phonemkette) eine Phonemsegmentfolge einzusetzen. Interpretiert man nämlich die Elemente des HMM - sogenannte Prototypenvektoren in einem hochdimensionalen Sprachmerkmalsraum - als die möglichen Abtastwerte für die Sprachmerkmals-Vektorfolge des neu eingesprochenen Wortes in diesem Raum, wird klar, daß bei dem bekannten Verfahren der Phonemerkennung nicht alle möglichen Abtastpunkte ausgenutzt werden. Vielmehr sind die Erfinder zu der Erkenntnis gekommen, daß die Abbildung auf eine Phonemsequenz eine relativ starke Einschränkung darstellt. Es wird daher vorgeschlagen, stattdessen Phonemsegmentfolgen als Abtast-Folgen zu verwenden.

Die Phonemsegmentfolgen zur Abtastung der Sprachmerkmals-Vektorfolgen sind jeweils insbesondere durch eine vorbestimmte Anzahl von Clusterzentren aus einem vorangehenden sprecherunabhängigen Training des HMM ("Prototypen") repräsentiert.

Zur weiteren Erhöhung der Erkennungsgenauigkeit wird das vorgeschlagene Verfahren bevorzugt derart ausgeführt, daß in mehreren Einsprechvorgängen eine Mehrzahl von Sprachmerkmals-Vektorfolgen gewonnen und mit gespeicherten Phonemsegmentfolgen abgetastet wird. Das Abtastergebnis wird hierbei einer statistischen Auswertung zur Bestimmung der die beste Abbildung liefernden Phonemsegmentfolge unterzogen.

Als ein erstes Anwendungsbeispiel der Erfindung wird ein Mobilfunk-Endgerät mit sprecherunabhängiger Spracherkennung genannt. Mit dieser sind die wichtigsten Menüpunkte zur Bedienung des Mobilfunk-Endgerätes direkt aufrufbar, und es ist auch eine Nummernwahl durch ziffernweises Einsprechen einer Rufnummer möglich.

Weiterhin ist das Spracherkennungssystem dazu vorbereitet, dem Nutzer die Vornahme und Auswahl von Einträgen in ein persönliches Telefonbuch bzw. aus diesem zu ermöglichen. Im Rahmen einer entsprechenden Menüführung wird der Nutzer zum Einsprechen des jeweiligen Namens aufgefordert. Im Anschluß an das Einsprechen wird das oben vorgeschlagene Enrollment bzw. SayIn-Verfahren auf Phonemsegmentebene ausgeführt und die ermittelte Phonemsegmentfolge in Aussprachelexikon gespeichert. Im weiteren kann der Benutzer dann per Spracheingabe den vorab trainierten Namen aus dem persönlichen Telefonbuch aufrufen und damit die Nummer des entsprechenden Teilnehmers direkt anwählen.

Als weiteres Beispiel wird eine Fernbedieneinheit eines Fernsehgerätes genannt, die - in grundsätzlich zum erwähnten Mobiltelefon analoger Weise - ein mit sprecherunabhängig vortrainierten Grundfunktionen ausgestattetes Spracherkennungssystems hat. Das System ist für die sprachgesteuerte Auswahl bestimmter Fernsehsender grundsätzlich vorbereitet, die Sendernamen sind aber nach dem Kauf des Gerätes in einem Say-In-Prozeß durch den Nutzer selbst einzusprechen. Dies ermöglicht den Verzicht auf eine herstellerseitige Speicherung von Sendernamen verschiedener Länder und Regionen und in verschiedenen Sprachen (einschließlich der erforderlichen regelmäßigen Aktualisierungen der zugrundeliegenden Datenbasen) und eröffnet dem Nutzer die Möglichkeit, die Sprachsteuerung zur Bedienung seines Fernsehgerätes immer auf dem aktuellsten Stand zu halten.

Als drittes Beispiel sei ein PDA mit Spracherkennungssystem zur Eingabe von Steuerbefehlen und Internetadressen genannt. Auch hier ist eine Aufteilung in einen - sprecherunabhängig vortrainierten - Basiswortschatz zur Steuerung der Grundfunktionen und einen Ergänzungswortschatz (Softwarebezeichnungen, Internetadressen, Stichworte etc.) sinnvoll, der vom späteren Nutzer sprecherabhängig "nachtrainiert" wird, wobei die vorgeschlagene Abbildung der Sprachmerkmals-Vektorfolgen auf Phonemsegmentfolgen vorgenommen wird.

Die Ausführung der Erfindung ist nicht auf die oben beschriebenen Beispiele beschränkt, sondern im Rahmen der anhängenden Ansprüche in einer Vielzahl von Abwandlungen möglich, die im Rahmen fachgemäßen Handelns liegen.

## Patentansprüche

1. Verfahren zur Spracherkennung in einem kleinen elektronischen Gerät, insbesondere Telekommunikations- oder Datenendgerät, mit Mitteln zur Spracheingabe und -erkennung, welche zur Erkennung eines vorbestimmten Basiswortschatzes aufgrund einer phonetischen Modellierung und zur Ergänzung des Basiswortschatzes durch Einsprechen neuer Worte ausgebildet sind, wobei für jedes neue Wort eine Sprachmerkmals-Vektorfolge in einem hochdimensionalen Merkmalsraum eines Hidden-Markov-Modells erzeugt wird,
**dadurch gekennzeichnet, daß**
die Sprachmerkmals-Vektorfolge mit einer gespeicherten Phonemsegmentfolge als Modellinformation abgetastet wird.

2. Verfahren nach Anspruch 1,
**dadurch gekennzeichnet, daß**
die Phonemsegmentfolgen zur Abtastung der Sprachmerkmals-Vektorfolge jeweils durch eine vorbestimmte Anzahl von Clusterzentren aus einem vorangehenden sprecherunabhängigen Training des Hidden-Markov-Modells repräsentiert sind.

3. Verfahren nach Anspruch 1 oder 2,
**dadurch gekennzeichnet, daß**
in mehreren Einsprechvorgängen eine Anzahl von Sprachmerkmals-Vektorfolgen gewonnen und mit gespeicherten Phonemsegmentfolgen abgetastet und das Abtastergebnis einer statistischen Auswertung zur Bestimmung der die beste Abbildung liefernden Phonemsegmentfolge unterzogen wird.
